# EUROPÄISCHE PATENTSCHRIFT

(11) **EP 3 067 326 B1**
(45) Veröffentlichungstag und Bekanntmachung des Hinweises auf die Patenterteilung: **07.09.2022**
(21) Anmeldenummer: 16159193.8
(22) Anmeldetag: 08.03.2016
(51) Int. Cl.: C02F 1/68, C02F 1/42, C02F 5/00

(54) **WASSERBEHANDLUNGSVORRICHTUNG MIT DOSIEREINRICHTUNG SOWIE VERWENDUNG DER VORRICHTUNG ZUR WASSERBEHANDLUNG**
WATER TREATMENT DEVICE WITH DOSING DEVICE AND USE OF THE DEVICE FOR WATER TREATMENT
DISPOSITIF POUR LE TRAITEMENT DE L'EAU AVEC UN DISPOSITIF DE DOSAGE ET UTILISATION DU DISPOSITIF POUR LE TRAITEMENT DE L'EAU

(30) Priorität: 09.03.2015 DE 202015101168 U
(43) Veröffentlichungstag der Anmeldung: 14.09.2016
(73) Patentinhaber: BWT Wassertechnik GmbH, 69198 Schriesheim (DE)
(72) Erfinder: Bergann, Ralph, 69469 Weinheim (DE)
(74) Vertreter: Reiser & Partner Patentanwälte mbB

(56) Entgegenhaltungen:
- WO-A1-98/13074
- DE-A1-102004 021 200
- DE-T2- 69 631 876
- DE-U1-202004 008 670
- DE-U1-202011 051 196
- FR-A- 835 829
- FR-A- 1 171 586
- US-A1- 2013 075 313

## Beschreibung

Die Erfindung betrifft eine Wasserbehandlungsvorrichtung umfassend eine Wasserleitung für Wasser, wobei das Wasser die Wasserleitung in einer Strömungsrichtung durchfließen kann, sowie eine Dosiereinrichtung für ein Wasserbehandlungsmittel, wobei die Dosiereinrichtung einen Dosiermittelbehälter und eine Einspeiseleitung umfasst, wobei die Einspeiseleitung so an die Wasserleitung angeschlossen ist, dass Wasserbehandlungsmittel aus dem Dosiermittelbehälter in die Wasserleitung abgegeben werden kann. Die Erfindung betrifft darüber hinaus die Verwendung einer solchen Wasserbehandlungsvorrichtung zur Wasserbehandlung.

Je nach Region ist die natürliche Wasserhärte sehr unterschiedlich. Hartes Wasser kann zu einer Reihe von Problemen führen. Diese umfassen z.B. die Verkalkung von Leitungen, Armaturen und technischen Anlagen, aber auch Kalkablagerungen in sanitären Einrichtungen. Zudem kann eine hohe Wasserhärte bei der Zubereitung von Speisen und Getränken nachteilig sein. Daher werden Wasserenthärtungsvorrichtungen eingesetzt, wenn die Wasserhärte reduziert werden soll.

Die Enthärtung von Wasser kann im Einzelfall die Eigenschaften des Wassers verändern. Dies kann z.B. dann der Fall sein, wenn zur Enthärtung ein lonenaustauscherverfahren eingesetzt wird, bei dem Kalziumionen und Magnesiumionen gegen Natriumionen ausgetauscht werden. Hierbei kann unter Umständen freie Kohlensäure entstehen, die die Gefahr von Korrosion in der Hausinstallation erhöhen kann. In diesem Zusammenhang ist es bereits bekannt, im Rahmen einer Wasserbehandlung Korrosionsinhibitoren in das Wasser einzubringen.

Die DE 10 2012 211 903 A1 beschreibt bereits eine Vorrichtung zur Enthärtung von Wasser, bei der in einem Enthärtungsbehälter ein regenerierbares Wasserenthärtungsmittel aufgenommen ist. Weiterhin wird beschrieben, dass die Neigung zur Korrosion durch einen Korrosionsinhibitor reduziert werden soll. Bei der in der DE 10 2012 211 903 A1 beschriebenen Vorrichtung wird der Korrosionsinhibitor als Granulat bereitgestellt und ist in dem Enthärtungsbehälter aufgenommen.

Darüber hinaus ist bekannt, beispielsweise neben einer Wasserenthärtungsvorrichtung eine separate Dosiereinrichtung vorzusehen, mit der ein flüssiger Korrosionsinhibitor durch eine Einspeiseleitung in das Wasser abgegeben werden kann.

Die FR 835 829 A beschreibt eine Vorrichtung zum Vermischen von zwei Flüssigkeiten in einem konstanten Verhältnis. Weiterhin ist ein Zähler mit einem Flügelrad vorgesehen.

Die FR 1 171 586 beschreibt eine Vorrichtung zum Neutralisieren von Wasser. Hierzu weist die Vorrichtung einen Behälter auf, dessen Inhalt in eine Rohrleitung abgegeben werden kann.

Die DE 20 2011 051 196 U1 beschreibt ein Überwachungssystem für einen Wasserkreislauf. Hierbei ist eine Enthärtungsanlage und getrennt davon eine Dosierstation vorgesehen.

Die WO 98/13074 beschreibt eine Dosiervorrichtung für ein Entkeimungsmittel in eine wassergespeiste Versorgungseinrichtung. Dabei ist ein Durchflussmesser vorgesehen, der eingespeistes Wasser mit dem Entkeimungsmittel vermischt.

Die Erfindung stellt sich die Aufgabe, eine Wasserbehandlungsvorrichtung sowie ein Verfahren zur Wasserbehandlung anzugeben, die eine hohe Wasserqualität ermöglichen.

Die Aufgabe wird bei einer Wasserbehandlungsvorrichtung mit den Merkmalen von Anspruch 1 gelöst. Demnach ist vorgesehen, dass in der Wasserleitung eine Mischeinrichtung mit einem beweglichen Mischelement angeordnet ist, um das Wasser mit dem Wasserbehandlungsmittel zu mischen. Durch die Mischeinrichtung kann eine besonders gleichmäßige Konzentration des Wasserbehandlungsmittels erreicht werden. Dies ist insbesondere auch dann der Fall, wenn das Wasserbehandlungsmittel diskontinuierlich eindosiert wird. Die Mischeinrichtung ermöglicht dabei, dennoch einen gleichmäßigen Gehalt des Wasserbehandlungsmittels im Wasser zu erreichen. Zudem ermöglicht die Gestaltung, dass die Herstellung und der Betrieb der Wasserbehandlungsvorrichtung einfach und zuverlässig sind.

Beschrieben wird weiterhin ein Verfahren zur Behandlung von Wasser, wobei das Wasser eine Wasserleitung in einer Strömungsrichtung durchfließt, wobei eine Dosiereinrichtung für ein Wasserbehandlungsmittel vorgesehen ist, wobei die Dosiereinrichtung einen Dosiermittelbehälter und eine Einspeiseleitung umfasst, wobei die Einspeiseleitung so an die Wasserleitung angeschlossen ist, dass Wasserbehandlungsmittel aus dem Dosiermittelbehälter in die Wasserleitung abgegeben werden kann, wobei in der Wasserleitung eine Mischeinrichtung mit einem beweglichen Mischelement angeordnet ist, die das Wasser mit dem Wasserbehandlungsmittel vermischt.

Eine vorteilhafte Ausgestaltung der Erfindung sieht vor, dass das bewegliche Mischelement durch das Wasser angetrieben wird. Dies trägt zu einer einfachen Herstellung und einem einfachen und zuverlässigen Betrieb bei. Die für die Mischung erforderliche Energie wird durch das fließende Wasser bereitgestellt. Die Mischeinrichtung muss nicht auf andere Weise angetrieben werden.

In vorteilhafter Weise ist das bewegliche Mischelement als rotierendes Mischelement ausgebildet ist. Insbesondere kann das Mischelement als Flügelrad ausgebildet sein.

Eine weitere Verbesserung sieht vor, dass die Mischeinrichtung in die Wasserbehandlungseinrichtung integriert ist. Insbesondere können die Mischeinrichtung und die Dosiereinrichtung in einem gemeinsamen Gehäuse angeordnet sein.

Die Erfindung sieht vor, dass die Einspeiseleitung der Dosiereinrichtung in Strömungsrichtung vor der Mischeinrichtung in die Wasserleitung mündet. Sofern eine Wasserenthärtung erfolgt, mündet die Einspeiseleitung vorzugsweise in die Ableitung.

Erfindungsgemäß ist bevorzugt, dass die Mischeinrichtung als eine kombinierte Mess- und Mischeinrichtung ausgebildet ist. Auf diese Weise kann von der Mischeinrichtung auch der Durchfluss gemessen werden. Die Dosierung des Wasserbehandlungsmittels und ggf. eine Regeneration der Wasserenthärtungseinrichtung kann in Abhängigkeit von dem gemessenen Durchfluss gesteuert werden. Vorzugsweise erzeugt die Mischeinrichtung ein Messsignal über den Wasserdurchfluss. Wenn eine Wasserenthärtungseinrichtung vorgesehen ist, ist die Mischeinrichtung bevorzugt in der Ableitung angeordnet.

Eine weitere Verbesserung sieht vor, dass die Wasserbehandlungsvorrichtung eine Steuerung aufweist, welche die Abgabe des Wasserbehandlungsmittels durch die Dosiereinrichtung steuert. Hierbei ist bevorzugt, dass die Steuerung an die als Mess- und Mischeinrichtung ausgebildete Mischeinrichtung angeschlossen ist. Auf diese Weise kann ein Messsignal der Mess- und Mischeinrichtung an die Steuerung weitergeleitet werden. Die Steuerung kann in Abhängigkeit der gemessenen Durchflussmenge die Dosierung des Wasserbehandlungsmittels steuern und/oder ggf. eine Regeneration der Wasserenthärtungseinrichtung auslösen.

Eine weitere Verbesserung sieht vor, dass die Mischeinrichtung einen elektrischen Messsignalausgang hat, der mit der Steuerung elektrisch verbunden ist. Vorzugsweise ist der Messsignalausgang ein Impulsausgang. Insbesondere kann die Mischeinrichtung als Reed-Wasserzähler oder Hall-Wasserzähler ausgebildet sein.

Eine vorteilhafte Ausgestaltung der Erfindung sieht vor, dass die Steuerung die Abgabe der Dosiermenge durch die Dosiereinrichtung jeweils auslöst, wenn sie aufgrund der Messung der Mischeinrichtung feststellt, dass in der Ableitung ein Durchfluss zwischen 0,1 Liter und 5 Liter, insbesondere zwischen 0,25 Liter und 1 Liter erfolgt ist. Auf diese Weise wird ein gleichmäßiger Gehalt des Wasserbehandlungsmittels in dem Weichwasser erreicht.

Weiterhin ist vorgesehen, dass die Wasserbehandlungsvorrichtung eine Wasserenthärtungseinrichtung mit einem Enthärtungsbehälter enthaltend ein regenerierbares Wasserenthärtungsmittel, wobei der Enthärtungsbehälter mit einer Zuleitung für Hartwasser und einer Ableitung für Weichwasser versehen ist, und eine Regenerationseinrichtung für das Wasserenthärtungsmittel mit einer Regeneriermittelleitung und einem Regeneriermittelbehälter, aufweist, wobei darüber hinaus eine Ventileinrichtung vorgesehen ist, sodass während eines Regenerationsvorgangs zur Regeneration des Wasserenthärtungsmittels Regeneriermittel in den Enthärtungsbehälter gelangt. Auf diese Weise kann in der Wasserbehandlungsvorrichtung zusätzlich zur Wasserbehandlung mit einem in das Wasser abgegebenen Wasserbehandlungsmittel, z.B. einem Korrosionsinhibitor, auch eine Wasserenthärtung erfolgen. Eine zusätzliche Einrichtung zur Wasserenthärtung ist nicht erforderlich, da beide Funktionen in eine Vorrichtung integriert werden können. Die Zuleitung und die Ableitung können Abschnitte der Wasserleitung bilden. Vorzugsweise kann die Steuerung als eine gemeinsame Steuerung ausgebildet sein, welche die Dosierung des Wasserbehandlungsmittels und die Regeneration der Wasserenthärtung steuert.

Besonders bevorzugt ist erfindungsgemäß, dass die Wasserenthärtungseinrichtung in die Wasserbehandlungsvorrichtung mit der Dosiereinrichtung integriert ist.

Erfindungsgemäß ist vorgesehen, dass eine Anschlusseinheit vorgesehen ist, die eine erste Rohrleitung für Hartwasser, die über einen ersten Anschluss der Anschlusseinheit an den Enthärtungsbehälter angeschlossen ist, und eine zweite Rohrleitung für Weichwasser, die über einen zweiten Anschluss der Anschlusseinheit an den Enthärtungsbehälter angeschlossen ist, umfasst, und wobei die Anschlusseinheit einen dritten Anschluss umfasst, an dem die Einspeiseleitung der Dosiereinrichtung angeschlossen ist. Auf diese Weise kann die Vorrichtung besonders einfach hergestellt werden. Der dritte Anschluss der Anschlusseinheit ermöglicht das zuverlässige Eindosieren des Wasserbehandlungsmittels. Hierbei ist vorgesehen, dass der dritte Anschluss an die zweite Rohrleitung angeschlossen ist.

Eine weitere Verbesserung wird dann erreicht, wenn die erste Rohrleitung mit einem ersten Geräteanschluss für Hartwasser und die zweite Rohrleitung mit einem zweiten Geräteanschluss für Weichwasser strömungsverbunden ist. Vorzugsweise bildet die Anschlusseinheit den ersten und zweiten Geräteanschluss.

Erfindungsgemäß ist vorgesehen, dass die Anschlusseinheit einen Körper aufweist, der die erste und die zweite Rohrleitung sowie den ersten, zweiten und dritten Anschluss bildet. Der Körper kann vorzugsweise als ein Spritzgussteil insbesondere aus Kunststoff ausgebildet sein. Der Körper weist eine Aufnahme für die Mischeinrichtung auf. Auf diese Weise kann die Herstellung vereinfacht und die Zuverlässigkeit erhöht werden. Besonders bevorzugt bildet der Körper auch den ersten und zweiten Geräteanschluss.

Weiterhin ist vorteilhaft, wenn die Dosiereinrichtung diskontinuierlich arbeitet und jeweils eine festgelegte Dosiermenge des Wasserbehandlungsmittels zudosiert.

Weiterhin kann in vorteilhafter Weise vorgesehen sein, dass die Wasserbehandlungsvorrichtung ein Gehäuse aufweist, in dem der Enthärtungsbehälter und die Dosiereinrichtung angeordnet sind.

Erfindungsgemäß ist besonders bevorzugt, dass die Wasserbehandlungsvorrichtung modular ausgebildet ist und eine erste und eine zweite Aufnahme aufweist, wobei in der ersten Aufnahme der Enthärtungsbehälter und in der zweiten Aufnahme der Dosiermittelbehälter für das Wasserbehandlungsmittel aufgenommen ist. Hierbei ist bevorzugt, dass die erste und die zweite Aufnahme jeweils so ausgebildet sind, dass sie einen Enthärtungsbehälter aufnehmen können. Vorzugsweise weisen die erste und zweite Aufnahme jeweils einen Aufnahmeraum gleicher Form und Größe auf.

Auf diese Weise kann die Wasserbehandlungsvorrichtung entweder mit einem Enthärtungsbehälter und einem Dosiermittelbehälter oder aber, wenn keine Zudosierung des Wasserbehandlungsmittels erfolgen soll, mit zwei gleich großen Enthärtungsbehältern bestückt werden, die insbesondere zur unterbrechungsfreien Versorgung mit enthärtetem Wasser im Wechsel betrieben werden können.

Nach der Erfindung ist besonders bevorzugt, wenn das Wasserbehandlungsmittel einen Korrosionsinhibitor umfasst. Vorzugsweise liegt das Wasserbehandlungsmittel als Flüssigkeit vor. Insbesondere kann das Wasserbehandlungsmittel eine phosphathaltige und/oder silikathaltige und/oder alkalisierende Flüssigkeit sein.

Eine weitere Verbesserung wird erreicht, wenn die Dosiereinrichtung eine Dosierpumpe aufweist, die von der Steuerung angesteuert wird. Erfindungsgemäß wird bevorzugt, dass das Wasserenthärtungsmittel einen Ionenaustauscher umfasst.

Vorzugsweise ist der Behälter mit dem regenerierbaren Wasserenthärtungsmittel als Enthärtersäule ausgebildet.

Eine vorteilhafte Ausgestaltung sieht vor, dass die Mischeinrichtung ein Messsignal erzeugt und die Steuerung in Abhängigkeit von dem Messsignal eine Regeneration einleitet.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung.

Es zeigen:
- Fig. 1:: Ein Fließschema einer erfindungsgemäßen Wasserbehandlungsvorrichtung;
- Fig. 2:: Einen Querschnitt durch ein Ausführungsbeispiel einer erfindungsgemäßen Wasserbehandlungsvorrichtung;
- Fig. 3:: Einen Querschnitt durch die Anschlusseinheit der Wasserbehandlungsvorrichtung aus Fig. 2;
- Fig. 4:: Eine perspektivische Darstellung der geschnitten dargestellten Anschlusseinheit aus Fig. 3;
- Fig. 5:: Die bei einer erfindungsgemäßen Wasserbehandlungsvorrichtung erreichte Konzentration des Wasserbehandlungsmittels im Wasser im Vergleich mit herkömmlichen Vorrichtungen.

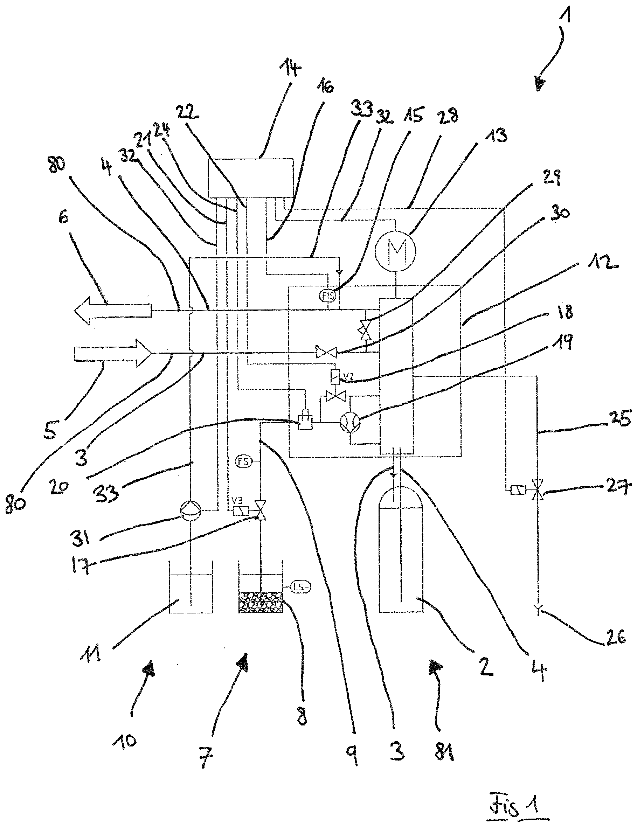

Figur 1 zeigt ein Fließschema einer erfindungsgemäßen Wasserbehandlungsvorrichtung 1. Diese weist eine integrierte Wasserenthärtungseinrichtung 81 mit einem Enthärtungsbehälter 2 auf, in dem ein regenerierbares Wasserenthärtungsmittel aufgenommen ist. Bei dem Wasserenthärtungsmittel kann es sich insbesondere um einen Ionenaustauscher handeln. Insbesondere kann in dem Enthärtungsbehälter 2 eine Schüttung eines Ionenaustauschers vorgesehen sein. Der Enthärtungsbehälter 2 ist dabei als Enthärtersäule ausgebildet. Der Enthärtungsbehälter 2 ist mit einer Zuleitung 3 für Hartwasser und einer Ableitung 4 für Weichwasser versehen. Das zugeführte Hartwasser 5 wird durch den Pfeil 5 und das abgeführte Weichwasser 6 durch den Pfeil 6 symbolisiert. Die Zuleitung 3 und die Ableitung 4 bilden Abschnitte einer Wasserleitung 80.

Die Wasserenthärtungsvorrichtung 81 weist darüber hinaus eine Regenerationseinrichtung 7 auf. Diese umfasst einen Regeneriermittelbehälter 8 und eine Regeneriermittelleitung 9. Bei dem Regeneriermittel kann es sich insbesondere um eine Salzlösung handeln.

Die Wasserenthärtungsvorrichtung weist darüber hinaus eine integrierte Dosiereinrichtung 10 für ein Wasserbehandlungsmittel auf. Das Wasserbehandlungsmittel ist in einem Dosiermittelbehälter 11 bereitgestellt und kann über eine Einspeiseleitung 33 wie unten noch näher erläutert zudosiert werden.

Die Wasserbehandlungsvorrichtung 1 weist weiterhin eine Ventileinrichtung 12 mit einem Motor 13 auf. Weiterhin sind eine Steuerung 14 und eine Mischeinrichtung 15 vorgesehen. Die Mischeinrichtung 15 weist ein bewegliches Mischelement auf. Zudem ist sie als kombinierte Mess- und Mischeinrichtung ausgebildet. Hierzu hat sie einen elektrischen Ausgang, der über eine Messleitung 16 mit der Steuerung 14 verbunden ist. Die Mischeinrichtung 15 kann insbesondere als Reed-Wasserzähler ausgebildet sein.

Die Ventileinrichtung 12 ist so eingerichtet, dass während eines Regenerationsvorgangs zur Regeneration des Wasserenthärtungsmittels Regeneriermittel aus dem Regeneriermittelbehälter 8 durch die Regeneriermittelleitung 9 in den Enthärtungsbehälter 2 gefördert wird. Die Regenerationseinrichtung 7 weist ein Magnetventil 17 auf. Die Ventileinrichtung 12 weist ein Magnetventil 18 und einen Injektor 19 auf. Weiterhin ist in der Regeneriermittelleitung 9 eine Elektrolyseeinheit 20 vorgesehen. Das Magnetventil 17, das Magnetventil 18 und die Elektrolyseeinheit 20 werden über Steuerleitung 21, 22 und 24 von der Steuerung 14 gesteuert. Der Motor 13 ist über eine Steuerleitung 32 mit der Steuerung 14 verbunden.

Über den Motor 13 wird die Ventileinrichtung 12 so betätigt, dass in dem Enthärtungsbetrieb Hartwasser 5 über die Zuleitung 3 in den Enthärtungsbehälter 2 gelangt und dort enthärtet wird. Das aus dem Enthärtungsbehälter 2 austretende Weichwasser 6 wird während des Enthärtungsbetriebs über die Ableitung 4 abgegeben.

Für die Regeneration wird durch den Motor 13 die Ventileinrichtung 12 so eingestellt, dass der Enthärtungsbehälter 2 nicht von zu enthärtendem Wasser durchflossen wird. Stattdessen wird Regeneriermittellösung aus dem Regeneriermittelbehälter 8 in den Enthärtungsbehälter 2 gefördert. Die verbrauchte Regeneriermittellösung wird durch eine Ablaufleitung 25 zu einem Ablauf 26 geleitet. In der Ablaufleitung 25 ist ein Magnetventil 27 vorgesehen. Das Magnetventil 27 ist über eine Steuerleitung 28 mit der Steuerung 14 verbunden. Die Regeneration wird insbesondere ausgelöst, wenn die Steuerung 14 aufgrund der Signale der Mess- und Mischeinrichtung 15 feststellt, dass eine bestimmte Menge an Weichwasser 6 entnommen wurde und das Wasserenthärtungsmittel daher erschöpft ist.

Die Ventileinrichtung 12 weist darüber hinaus ein Verschneideventil 29 auf. Durch dieses kann die Härte des Weichwassers 6 auf den gewünschten Wert eingestellt werden. Weiterhin ist in der Zuleitung 3 ein Rückschlagventil 30 vorgesehen.

Die Dosiereinrichtung weist eine Dosierpumpe 31 auf. Die Dosiereinrichtung 10 ist über eine Steuerleitung 32 mit der Steuerung 14 verbunden. Über die Dosiereinrichtung 10 kann das Wasserbehandlungsmittel dem Wasser zudosiert werden, bevor es zu der Mischeinrichtung 15 gelangt. Auf diese Weise kann in der Mischeinrichtung 15 eine intensive Durchmischung erfolgen. Die Mischeinrichtung 15 kann als eine kombinierte Mess- und Mischeinrichtung ausgebildet sein. Insbesondere kann die Mischeinrichtung 15 ein rotierendes Element, wie z.B. ein Flügelrad aufweisen, das eine intensive Durchmischung ermöglicht. Eine Durchmischung kann aber auch auf andere Weise, z.B. durch Erzeugung von Turbulenzen, erreicht werden. Figur 1 lässt erkennen, dass die Einspeiseleitung 33 in Strömungsrichtung vor der Mischeinrichtung 15 in die Ableitung 4 mündet. Die Dosiereinrichtung 10 arbeitet diskontinuierlich. Durch die Dosierpumpe 31 wird jeweils eine festgelegte Dosiermenge des Wasserbehandlungsmittels zudosiert. Die Steuerung 14 ist dabei vorzugsweise so eingerichtet, dass sie die Abgabe der Dosiermenge durch die Dosiereinrichtung 10 jeweils auslöst, wenn sie aufgrund der Messung der Mess- und Mischeinrichtung 15 feststellt, dass in der Ableitung 4 ein Durchfluss zwischen 0,1 Liter und 5 Liter, insbesondere zwischen 0,25 Liter und 1 Liter erfolgt ist.

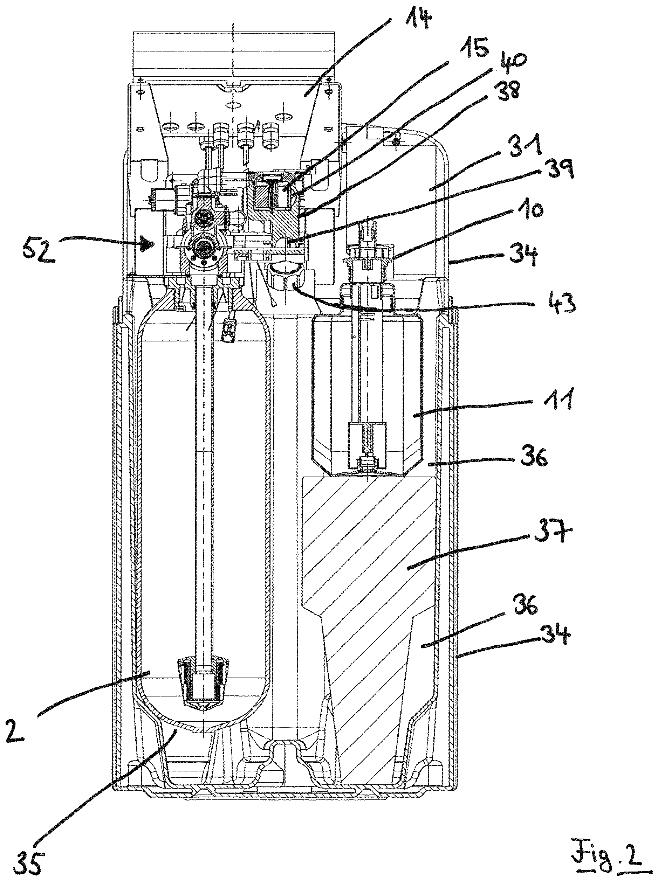

Figur 2 zeigt ein konkretes Ausführungsbeispiel einer Wasserbehandlungsvorrichtung 1, welche das in Figur 1 dargestellte Fließschema verwirklicht. Figur 2 lässt gut erkennen, dass die Wasserbehandlungsvorrichtung 1 ein Gehäuse 34 aufweist. Dies weist eine Aufnahme 35 auf, in der der Enthärtungsbehälter 2 angeordnet ist. Darüber hinaus weist das Gehäuse 34 eine weitere Aufnahme 36 auf. In der weiteren Aufnahme 36 ist der Dosiermittelbehälter 11 angeordnet. Wie dargestellt, ist die Wasserenthärtungsvorrichtung 1 modular aufgebaut. Die Aufnahmen 35 und 36 sind dabei so bemessen, dass jeweils ein Enthärtungsbehälter 2 gleicher Größe aufgenommen werden kann. Auf diese Weise kann die Wasserbehandlungsvorrichtung 1 mit zwei Enthärtungsbehältern 2 ausgestattet werden, die zur Erzielung einer unterbrechungsfreien Enthärtung im Wechsel betrieben werden können. Wie dargestellt, ist aber in dem dargestellten Ausführungsbeispiel in der Aufnahme 36 kein Enthärtungsbehälter 2, sondern der Dosiermittelbehälter 11 aufgenommen. Da der Dosiermittelbehälter 11 kleiner ist als der Enthärtungsbehälter 2, ist unter dem Dosiermittelbehälter 11 ein Halter 37 angeordnet. Anders als dargestellt können auch eine oder mehrere noch weitere Aufnahmen vorgesehen werden, damit zwei Enthärtungsbehälter 2 und die Dosiereinrichtung 10 in dem Gehäuse 34 angeordnet werden können.

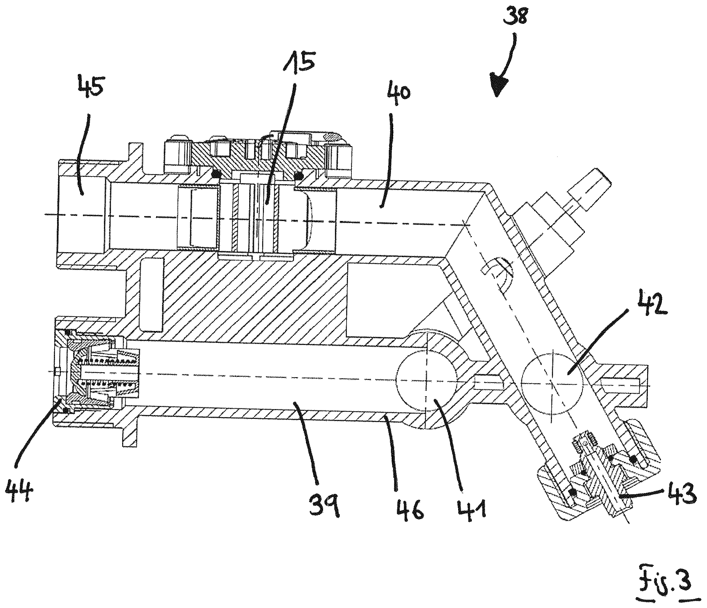

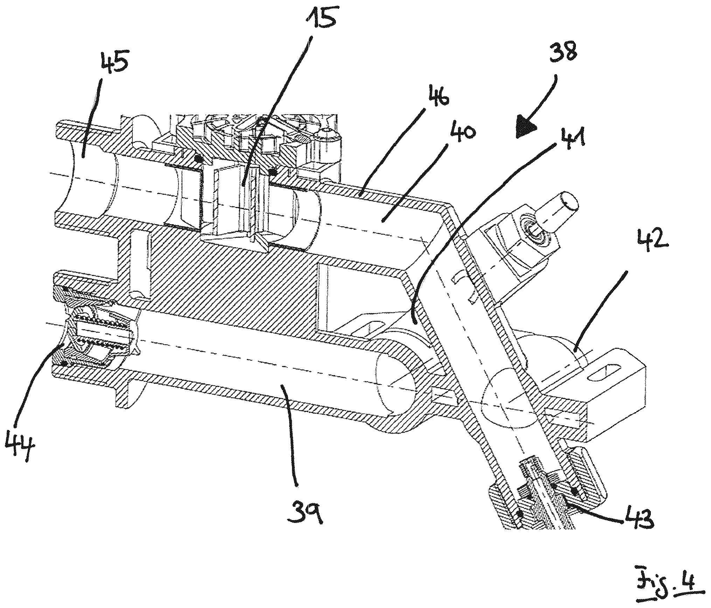

Die Wasserbehandlungsvorrichtung 1 weist eine Anschlusseinheit 38 auf. Diese wird im Zusammenhang mit den Figuren 3 und 4 noch näher beschrieben.

Die Figuren 3 und 4 zeigen vergrößert die Anschlusseinheit 38. Gut zu erkennen ist, dass die Anschlusseinheit 38 eine erste Rohrleitung 39 für Hartwasser 5 und eine zweite Rohrleitung 40 für Weichwasser 6 aufweist. Die erste Rohrleitung 39 wird über den ersten Anschluss 41 an dem Enthärtungsbehälter 2 angeschlossen. Die zweite Rohrleitung 40 wird über einen zweiten Anschluss 42 an dem Enthärtungsbehälter 2 angeschlossen. Die Anschlusseinheit 38 weist darüber hinaus einen dritten Anschluss 43 auf, an dem die Einspeiseleitung 33 angeschlossen ist. Dabei ist der dritte Anschluss 43 an die zweite Rohrleitung 40 angeschlossen. Die erste Rohrleitung 39 weist einen ersten Geräteanschluss 44 und die zweite Rohrleitung 40 einen zweiten Geräteanschluss 45 auf. Über den ersten und zweiten Geräteanschluss 44, 45 kann die Wasserbehandlungsvorrichtung 1 an eine Hausinstallation angeschlossen werden. In der Anschlusseinheit 38 ist die Mischeinrichtung 15 angeordnet, welche als kombinierte Mess- und Mischeinrichtung ausgebildet ist. Die Anschlusseinheit 38 weist einen Körper 46 auf. Dieser bildet die erste und die zweite Rohrleitung 39, 40 sowie den ersten, zweiten und dritten Anschluss 40, 42 und 43 aus. Der Körper 46 kann vorzugsweise als ein einteiliges Spritzgussteil aus Kunststoff hergestellt sein. Der Körper 46 weist eine Mischeinrichtungsaufnahme für die Mischeinrichtung 15 auf. Im dargestellten Ausführungsbeispiel ist die Mischeinrichtung 15 als Flügelradzähler ausgebildet.

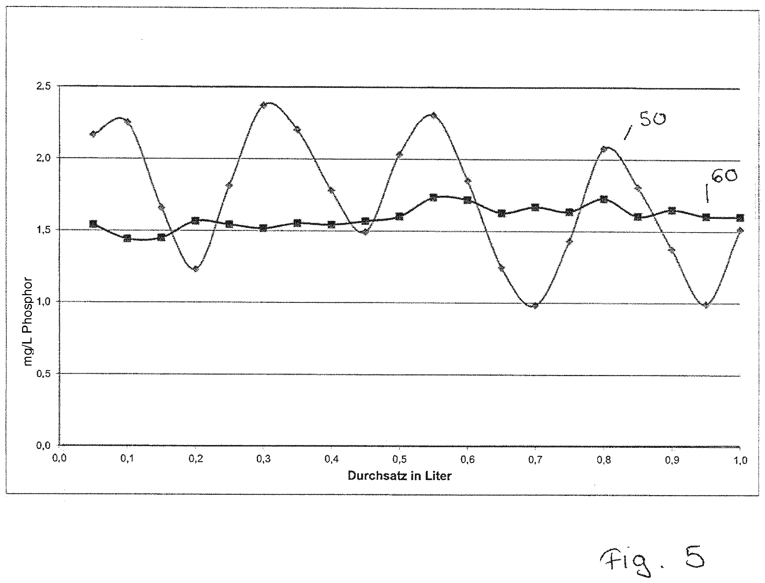

Figur 5 zeigt die Konzentration des Wasserbehandlungsmittels in dem Weichwasser, so wie sie mit der erfindungsgemäßen Wasserbehandlungsvorrichtung erreicht wird. Diese Konzentration ist durch den Graphen 60 dargestellt. Demgegenüber zeigt der Graph 50 die Konzentration des Wasserbehandlungsmittels in dem Weichwasser, wie sie mit herkömmlichen Vorrichtungen erhalten wird. Der Vergleich macht deutlich, dass mit der Erfindung eine erhebliche Vergleichmäßigung des Gehalts an dem Wasserbehandlungsmittel erreicht wird. Insbesondere trägt die Vermischung durch die Mischeinrichtung zur Vergleichmäßigung bei.

## Patentansprüche

1. Wasserbehandlungsvorrichtung mit einer Wasserenthärtungseinrichtung (81) mit einem Enthärtungsbehälter (2) enthaltend ein regenerierbares Wasserenthärtungsmittel, wobei der Enthärtungsbehälter (2) mit einer Zuleitung (3) für Hartwasser (5) und einer Ableitung (4) für Weichwasser (6) versehen ist, und eine Regenerationseinrichtung (7) für das Wasserenthärtungsmittel mit einer Regeneriermittelleitung (9) und einem Regeneriermittelbehälter (8), wobei darüber hinaus eine Ventileinrichtung (12) vorgesehen ist, sodass während eines Regenerationsvorgangs zur Regeneration des Wasserenthärtungsmittels Regeneriermittel in den Enthärtungsbehälter (2) gelangt, wobei die Wasserbehandlungsvorrichtung eine Wasserleitung (80) für Wasser umfasst, wobei das Wasser die Wasserleitung (80) in einer Strömungsrichtung durchfließen kann, sowie eine Dosiereinrichtung (10) für ein Wasserbehandlungsmittel, wobei die Dosiereinrichtung (10) einen Dosiermittelbehälter (11) und eine Einspeiseleitung (33) umfasst, wobei die Einspeiseleitung (33 ) so an die Wasserleitung (80) angeschlossen ist, dass Wasserbehandlungsmittel aus dem Dosiermittelbehälter (11) in die Wasserleitung (80) abgegeben werden kann, **dadurch gekennzeichnet, dass** in der Wasserleitung (80) eine Mischeinrichtung (15) mit einem beweglichen Mischelement angeordnet ist, um das Wasser mit dem Wasserbehandlungsmittel zu mischen, wobei die Einspeiseleitung (33) der Dosiereinrichtung (10) in Strömungsrichtung vor der Mischeinrichtung (15) in die Wasserleitung (80) mündet, wobei eine Anschlusseinheit (38) vorgesehen ist, die eine erste Rohrleitung (39) für Hartwasser (5), die über einen ersten Anschluss (41) der Anschlusseinheit (38) an den Enthärtungsbehälter (2) angeschlossen ist, und eine zweite Rohrleitung (40) für Weichwasser (6), die über einen zweiten Anschluss (42) der Anschlusseinheit (38) an den Enthärtungsbehälter (2) angeschlossen ist, umfasst, und wobei die Anschlusseinheit (38) einen dritten Anschluss (43) umfasst, an dem die Einspeiseleitung (33) der Dosiereinrichtung (10) angeschlossen ist, wobei der dritte Anschluss (43) an die zweite Rohrleitung (40) angeschlossen ist, wobei die Anschlusseinheit (38) in der zweiten Rohrleitung (40) die Mischeinrichtung (15) aufweist, wobei die Anschlusseinheit (38) einen Körper (46) aufweist, der die erste und die zweite Rohrleitung (39, 40) sowie den ersten, zweiten und dritten Anschluss (41, 42, 43) bildet.

2. Wasserbehandlungsvorrichtung nach Anspruch 1, **dadurch gekennzeichnet, dass** die Mischeinrichtung (15), insbesondere das bewegliche Mischelement, durch das Wasser angetrieben wird.

3. Wasserbehandlungsvorrichtung nach Anspruch 1 oder 2, **dadurch gekennzeichnet, dass** das bewegliche Mischelement als rotierendes Mischelement ausgebildet ist.

4. Wasserbehandlungsvorrichtung nach einem der Ansprüche 1 bis 3, **dadurch gekennzeichnet, dass** die Mischeinrichtung (15) als eine kombinierte Mess- und Mischeinrichtung ausgebildet ist, um den Durchfluss in der Wasserleitung (80) zu messen.

5. Wasserbehandlungsvorrichtung nach einem der Ansprüche 1 bis 4, **dadurch gekennzeichnet, dass** sie eine Steuerung (14) aufweist, welche die Abgabe des Wasserbehandlungsmittels durch die Dosiereinrichtung (10) steuert.

6. Wasserbehandlungsvorrichtung nach einem der Ansprüche 1 bis 5, **dadurch gekennzeichnet, dass** die erste Rohrleitung (39) mit einem ersten Geräteanschluss (44) für Hartwasser (5) und die zweite Rohrleitung (40) mit einem zweiten Geräteanschluss (45) für Weichwasser (6) strömungsverbunden ist.

7. Wasserbehandlungsvorrichtung nach einem der Ansprüche 1 bis 6, **dadurch gekennzeichnet, dass** die Dosiereinrichtung (10) Wasserbehandlungsmittel aufweist, wobei das Wasserbehandlungsmittel einen Korrosionsinhibitor umfasst.

8. Wasserbehandlungsvorrichtung nach einem der Ansprüche 1 bis 7, **dadurch gekennzeichnet, dass** die Wasserbehandlungsvorrichtung modular ausgebildet ist und eine erste und eine zweite Aufnahme (35, 36) aufweist, wobei in der ersten Aufnahme (35) der Enthärtungsbehälter (2) und in der zweiten Aufnahme (36) der Dosiermittelbehälter (11) für das Wasserbehandlungsmittel aufgenommen ist.

9. Verwendung der Wasserbehandlungsvorrichtung nach einem der Ansprüche 1 bis 8 zur Behandlung von Wasser.

## Claims

1. Water treatment device comprising a water-softening means (81) having a softening container (2) containing a regenerable water softening agent, the softening container (2) being provided with an inlet line (3) for hard water (5) and an outlet line (4) for soft water (6), and a regeneration means (7) for the water softening agent being provided with a regenerating agent line (9) and a regenerating agent container (8), a valve means (12) further being provided in such a way that, during a regeneration process for regenerating the water softening agent, regenerating agent passes into the softening container (2), the water treatment device comprising a water line (80) for water, the water being able to flow through the water line (80) in a flow direction, as well as a metering means (10) for a water treatment agent, the metering means (10) comprising a metered agent container (11) and a feed line (33), the feed line (33) being connected to the water line (80) in such a way that water treatment agent can be outputted from the metered agent container (11) into the water line (80), **characterised in that** a mixing means (15) having a movable mixing element is arranged in the water line (80) so as to mix the water with the water treatment agent, the feed line (33) of the metering means (10) opening into the water line (80) upstream from the mixing means (15) in the flow direction, a connection unit (38) being provided which comprises a first pipeline (39) for hard water (5), connected to the softening container (2) via a first terminal (41) of the connection unit (38), and a second pipeline (40) for soft water (6), connected to the softening container (2) via a second terminal (42) of the connection unit (38), and the connection unit (38) comprising a third terminal (43), to which the feed line (33) of the metering means (10) is connected, the third terminal (43) being connected to the second pipeline (40), the connection unit (38) having the mixing means (15) in the second pipeline (40), the connection unit (38) having a body (46) which forms the first and second pipeline (39, 40) and the first, second and third terminal (41, 42, 43).

2. Water treatment device according to claim 1, **characterised in that** the mixing means (15), in particular the movable mixing element, is driven by the water.

3. Water treatment device according to either claim 1 or claim 2, **characterised in that** the movable mixing element is formed as a rotating mixing element.

4. Water treatment device according to any of claims 1 to 3, **characterised in that** the mixing means (15) is formed as a combined measurement and mixing means so as to measure the throughput in the water line (80).

5. Water treatment device according to any of claims 1 to 4, **characterised in that** it has a control system (14) which controls the output of the water treatment agent by the metering means (10).

6. Water treatment device according to any of claims 1 to 5, **characterised in that** the first pipeline (39) is provided with a first appliance terminal (44) for hard water (5) and the second pipeline (40) is fluidically connected to a second appliance terminal (45) for soft water (6).

7. Water treatment device according to any of claims 1 to 6, **characterised in that** the metering means (10) has water treatment agent, the water treatment agent comprising a corrosion inhibitor.

8. Water treatment device according to any of claims 1 to 7, **characterised in that** the water treatment device is formed modularly and has a first and a second recess (35, 36), the softening container (2) being received in the first recess (35) and the metered agent container (11) for the water treatment agent being received in the second recess (36).

9. Use of the water treatment device according to any of claims 1 to 8 for treating water.

## Revendications

1. Dispositif pour le traitement de l'eau ayant un adoucisseur d'eau (81) avec un réservoir d'adoucissement (2) contenant un agent adoucisseur d'eau pouvant être régénéré, dans lequel le réservoir d'adoucissement (2) est pourvu d'une conduite d'entrée (3) d'eau dure (5) et d'une conduite de sortie (4) d'eau adoucie (6), et un dispositif de régénération (7) pour l'agent adoucisseur d'eau ayant une conduite d'agent régénérant (9) et un réservoir d'agent régénérant (8), dans lequel un dispositif de vannes (12) est en outre prévu, de sorte que pendant une opération de régénération destinée à régénérer l'agent adoucisseur d'eau, l'agent régénérant passe dans le réservoir d'adoucissement (2), dans lequel le dispositif pour le traitement de l'eau comprend une conduite d'eau (80) pour de l'eau, dans lequel l'eau peut s'écouler à travers la conduite d'eau (80) dans un sens d'écoulement, ainsi qu'un dispositif de dosage (10) pour un agent de traitement de l'eau, dans lequel le dispositif de dosage (10) comprend un réservoir d'agent doseur (11) et une conduite d'alimentation (33), dans lequel la conduite d'alimentation (33) est raccordée à la conduite d'eau (80) de sorte que l'agent de traitement de l'eau peut être transféré dans la conduite d'eau (80) à partir du réservoir d'agent doseur (11), **caractérisé en ce qu'**un dispositif de mélange (15) avec un élément de mélange mobile est agencé dans la conduite d'eau (80) afin de mélanger l'eau avec l'agent de traitement de l'eau, dans lequel la conduite d'alimentation (33) du dispositif de dosage (10) débouche dans la conduite d'eau (80) en amont du dispositif de mélange (15) dans le sens d'écoulement, dans lequel est prévue une unité de raccordement (38) comprenant une première tuyauterie (39) pour l'eau dure (5) qui est raccordée au réservoir d'adoucissement (2) par l'intermédiaire d'un premier raccord (41) de l'unité de raccordement (38), et une seconde tuyauterie (40) pour l'eau adoucie (6) qui est raccordée au réservoir d'adoucissement (2) par l'intermédiaire d'un deuxième raccord (42) de l'unité de raccordement (38), et dans lequel l'unité de raccordement (38) comprend un troisième raccord (43) auquel est raccordée la conduite d'alimentation (33) du dispositif de dosage (10), dans lequel le troisième raccord (43) est raccordé à la seconde tuyauterie (40), dans lequel l'unité de raccordement (38) dans la seconde tuyauterie (40) comporte le dispositif de mélange (15), dans lequel l'unité de raccordement (38) comporte un corps (46) qui forme les première et seconde tuyauteries (39, 40) ainsi que les premier, deuxième et troisième raccords (41, 42, 43).

2. Dispositif pour le traitement de l'eau selon la revendication 1, **caractérisé en ce que** le dispositif de mélange (15), en particulier l'élément de mélange mobile, est entraîné par l'eau.

3. Dispositif pour le traitement de l'eau selon la revendication 1 ou 2, **caractérisé en ce que** l'élément de mélange mobile est réalisé sous la forme d'un élément de mélange rotatif.

4. Dispositif pour le traitement de l'eau selon l'une des revendications 1 à 3, **caractérisé en ce que** le dispositif de mélange (15) est réalisé sous la forme d'un dispositif combiné de mesure et de mélange afin de mesurer le débit dans la conduite d'eau (80).

5. Dispositif pour le traitement de l'eau selon l'une des revendications 1 à 4, **caractérisé en ce qu'**il comporte une commande (14) qui commande la distribution de l'agent de traitement de l'eau à travers le dispositif de dosage (10).

6. Dispositif pour le traitement de l'eau selon l'une des revendications 1 à 5, **caractérisé en ce que** la première tuyauterie (39) est en communication fluidique avec un premier raccord d'appareil (44) pour l'eau dure (5) et la seconde tuyauterie (40) est en communication fluidique avec un second raccord d'appareil (45) pour l'eau adoucie (6).

7. Dispositif pour le traitement de l'eau selon l'une des revendications 1 à 6, **caractérisé en ce que** le dispositif de dosage (10) comporte un agent de traitement de l'eau, dans lequel l'agent de traitement de l'eau comprend un inhibiteur de corrosion.

8. Dispositif pour le traitement de l'eau selon l'une des revendications 1 à 7, **caractérisé en ce que** le dispositif pour le traitement de l'eau est formé de manière modulaire et comporte des premier et second logements (35, 36), dans lequel le réservoir d'adoucissement (2) est reçu dans le premier logement (35) et le réservoir d'agent doseur (11) pour l'agent de traitement de l'eau est reçu dans le second logement (36).

9. Utilisation du dispositif pour le traitement de l'eau selon l'une des revendications 1 à 8 pour le traitement de l'eau.
